# FASCICULE DE BREVET EUROPEEN

(11) **EP 2 629 501 B1**
(45) Date de publication et mention de la délivrance du brevet: **22.10.2014**
(21) Numéro de dépôt: 12305166.6
(22) Date de dépôt: 15.02.2012
(51) Int. Cl.: H04M 3/46

(54) **Procédé pour arrêter les sonneries d'un groupe de terminaux**
Verfahren zum Unterbrechen der Klingeltöne einer Gruppe von Endgeräten
Method for stopping the ringing of a group of terminals

(43) Date de publication de la demande: 21.08.2013
(73) Titulaire: ALCATEL LUCENT, 92100 Boulogne-Billancourt (FR)
(72) Inventeur: Mourot, Patrick, 67400 ILLKIRCH (FR); Palagi, Bruno, 67400 ILLKIRCH (FR)
(74) Mandataire: Sciaux, Edmond

(56) Documents cités:
- WO-A1-2010/015893
- GB-A- 2 407 228
- SCHULZRINNE COLUMBIA UNIVERSITY D ORAN CISCO G CAMARILLO ERICSSON H: "The Reason Header Field for the Session Initiation Protocol (SIP); rfc3326.txt", 20021201, 1 décembre 2002 (2002-12-01), XP015009094, ISSN: 0000-0003
- JOHNSTON A ET AL: "Session Initiation Protocol Service Examples; draft-ietf-sipping-service-examples-15.txt ", 20080711, vol. sipping, no. 15, 11 juillet 2008 (2008-07-11), XP015056390, ISSN: 0000-0004
- Henning Schulzrinne: "The Session Initiation Protocol", , 31 mai 2001 (2001-05-31), pages 1-137, XP55031974, New York, New York Extrait de l'Internet: URL:http://www.cs.columbia.edu/~hgs/teachi ng/ais/slides/2003/sip_long.pdf [extrait le 2012-07-05]

## Description

L'invention concerne un procédé pour arrêter les sonneries d'un groupe de terminaux attribués à une même personne, et utilisables pour la voix, les données, ou le multimédia. Dans une entreprise, il est courant qu'un même employé dispose de plusieurs terminaux, par exemple un terminal téléphonique fixe dans son bureau, et un terminal téléphonique mobile pour se déplacer hors de son bureau. Un particulier peut avoir un téléphone fixe à la maison et un téléphone mobile pour circuler à l'extérieur.

Pour pouvoir être joint en toutes circonstances, un employé d'une entreprise configure le système de communication de l'entreprise qui l'emploie de façon qu'un appel sur un de ses terminaux fasse sonner tous les terminaux qui lui sont attribués. De même, un particulier peut configurer des réseaux de téléphonie publique, où il est abonné, de façon qu'un appel sur un de ses terminaux fasse sonner tous les terminaux dont il dispose.

Dans les cas où l'abonné appelé n'est pas au voisinage de tous ses terminaux, un (ou plusieurs terminaux) sonne inutilement lors d'un appel, et surtout continue à sonner après que l'abonné ait pris ou refusé l'appel sur l'un de ses terminaux. Le fait qu'un (ou plusieurs) terminal sonne inutilement peut être gênant pour les personnes voisines lorsque l'abonné n'est pas à proximité pour arrêter immédiatement la sonnerie.

Une solution connue à ce problème consiste à configurer le réseau d'entreprise ou le réseau public dont dépend un terminal de façon à l'empêcher de sonner, à partir du moment où l'abonné va s'éloigner de ce terminal. Pour un téléphone mobile, une autre solution consiste à le configurer de façon à activer un vibreur à la place de la sonnerie. Mais ces solutions connues imposent que l'abonné pense à faire une configuration chaque fois qu'il va changer de lieu.

Le document WO 2010/015893 A1 par exemple décrit un système qui pour un appel donné fait sonner tous les terminaux d'un groupe simultanément.

Le but de l'invention est de remédier à cet inconvénient.

L'objet de l'invention est un procédé pour arrêter les sonneries d'un groupe de terminaux qui sonnent simultanément lorsqu'un appel est destiné à un des terminaux de groupe, et que l'un quelconque de ces terminaux a pris ou refusé cet appel ; caractérisé en ce qu'il comporte les étapes consistant à :
- détecter un signal indiquant qu'un appel a été pris ou refusé par un terminal de ce groupe ;
- et commander l'arrêt des sonneries dans tous les terminaux du groupe, lorsqu'un signal indiquant que l'appel a été pris ou refusé par un terminal de ce groupe a été détecté.

Le procédé ainsi caractérisé ne nécessite qu'une seule intervention de l'utilisateur du groupe de terminaux, parce qu'il suffit de configurer une seule fois, pour tous les appels, un dispositif programmable capable de détecter un signal indiquant qu'un appel a été pris ou refusé par un terminal de ce groupe. Ensuite l'utilisateur de ce groupe de terminaux n'a plus à se préoccuper des terminaux autres que celui qu'il utilise pour prendre un appel, ou pour refuser l'appel (Par exemple, il éteint son téléphone ou il presse un touche « Raccrocher »).

L'invention a aussi pour objet un dispositif programmable comportant des moyens de stockage sur lesquels est enregistré un programme, ce programme comportant des instructions qui, lorsqu'elles sont exécutées, réalisent les étapes du précédé selon l'invention.

L'invention sera mieux comprise et d'autres caractéristiques apparaîtront à l'aide de la description ci-dessous et des figures l'accompagnant :
- La figure 1 illustre le procédé selon l'invention dans un exemple où l'abonné appelé a trois terminaux qui sont tous reliés directement à un réseau public.
- La figure 2 illustre le procédé selon l'invention dans un exemple où l'abonné appelé a plusieurs terminaux dont deux sont reliés directement à un réseau public ; et un troisième est relié à un autocommutateur privé.

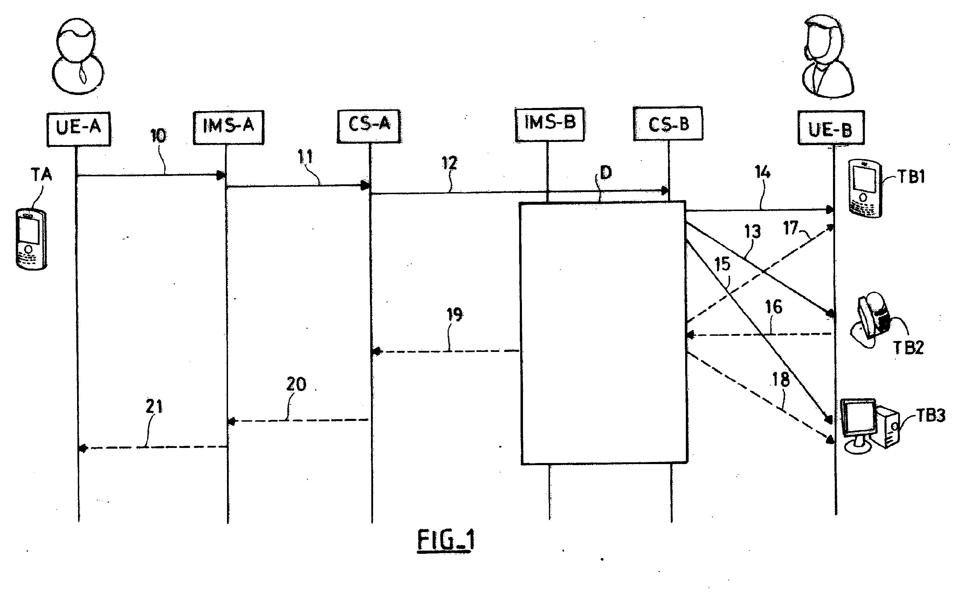

Dans l'exemple représenté sur la figure 1, un utilisateur A utilise un terminal TA relié à un réseau IMS-A de type IMS. Cet utilisateur A appelle un utilisateur B qui dispose de trois terminaux TB1, TB2, TB3. Par exemple, le terminal TB1 est un terminal téléphonique mobile et le terminal TB2 est un terminal fixe qui sont reliés à un réseau public CS-B à commutation de circuits ; et le terminal TB3 est un logiciel de téléphonie exécuté par un ordinateur personnel qui est relié à un réseau public IMS-B de type IMS. Dans cet exemple, l'utilisateur A appelle le terminal fixe TB2. Cet appel transite par un réseau public CS-A à commutation de circuits, et par le réseau public CS-B à commutation de circuits. Les échanges de messages de signalisation sont les suivants :
- 10 : L'équipement UE-A de l'utilisateur A, par exemple un terminal mobile TA demande l'établissement d'un appel vers un équipement UE-B de l'utilisateur B, par exemple son téléphone fixe TB2. Un message de demande d'établissement d'appel est adressé au réseau IMS-A de type IMS auquel est raccordé le terminal TA.
- 11: Ce message de demande d'établissement d'un appel est retransmis à un réseau CS-A à commutation de circuits.
- 12 : Ce message de demande d'établissement d'un appel est retransmis ensuite à un réseau CS-B à commutation de circuits, auquel est raccordé le terminal fixe TB2.
- 13 : Le réseau CS-B à commutation de circuits envoie un signal de sonnerie au terminal fixe TB2.
- 14 : Selon un procédé connu, le réseau CS-B à commutation de circuits envoie en outre un signal de sonnerie au terminal mobile TB1, parce que l'utilisateur B a configuré le réseau CS-B pour faire sonner aussi le terminal mobile TB1.
- 15 : Le réseau CS-B à commutation de circuits envoie en outre un signal de sonnerie au terminal TB3 qui est un logiciel de téléphonie exécuté par un ordinateur personnel, parce que l'utilisateur B a configuré le réseau CS-B pour faire sonner aussi le terminal logiciel TB3.
- 17 : Dans cet exemple, l'utilisateur B prend l'appel sur le terminal fixe TB2. Le terminal TB2 envoie donc au réseau CS-B un signal indiquant que l'appel est accepté.
- 18, 19 : Dans le réseau CS-B ou le réseau IMS-B, un dispositif D mettant en oeuvre le procédé selon l'invention fait cesser la sonnerie sur le terminal mobile TB1 et sur le terminal logiciel TB3, sans que l'utilisateur B intervienne sur ces deux terminaux TB1 et TB3. Selon le type du réseau CS-B et selon le type des terminaux TB1 et TB3, la façon de commander la sonnerie dans chaque terminal diffère. Dans un terminal téléphonique analogique classique, la sonnerie dure tant que le signal de sonnerie est envoyé au terminal. Le réseau interrompt l'envoi du signal de sonnerie pour arrêter la sonnerie. Dans d'autres types de réseau, le réseau envoie un premier message pour que le terminal commence la sonnerie puis envoie un second message pour arrêter la sonnerie.
- 19 : Le réseau CS-B et le réseau IMS-B envoie au réseau CS-A un message indiquant que le terminal appelé est en train de sonner.
- 20 : Le réseau CS-A retransmet, au réseau IMS- A, un message indiquant que le terminal appelé est en train de sonner.
- 21 : Le réseau IMS-A retransmet, au terminal TA de l'utilisateur A, un message indiquant que le terminal appelé est en train de sonner.

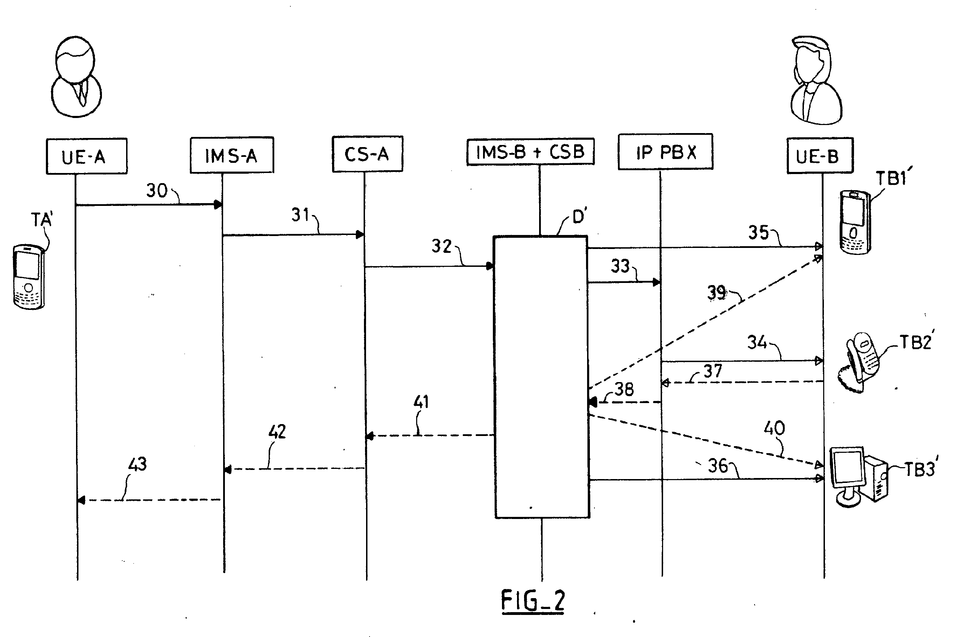

Dans l'exemple représenté sur la figure 2, un utilisateur A utilise un terminal TA' relié à un réseau IMS-A de type IMS. Cet utilisateur A appelle un utilisateur B qui dispose de trois terminaux TB1', TB2', TB3'. Par exemple le terminal TB1' est un terminal téléphonique mobile relié à un réseau public CS-B à commutation de circuits ; le terminal TB2' est un terminal fixe qui sont reliés au réseau public CS-B via un autocommutateur privé IP_PBX ; et le terminal TB3' est un logiciel de téléphonie exécuté par un ordinateur personnel qui est relié à un réseau public IMS-B de type IMS. Dans cet exemple, l'utilisateur A appelle le terminal fixe TB2' qui est derrière l'autocommutateur privé IP-PBX. Cet appel transite par un réseau public CS-A à commutation de circuits, le réseau public CS-B à commutation de circuits, et l'autocommutateur privé IP-PBX. Les échanges de messages de signalisation sont les suivants :
- 30 : L'équipement UE-A de l'utilisateur A, par exemple un terminal mobile TA', demande l'établissement d'un appel vers un équipement UE-B de l'utilisateur B, par exemple son téléphone fixe TB2' qui est relié à l'autocommutateur IP-PBX. Un message de demande d'établissement d'appel est adressé au réseau IMS-A de type IMS auquel est raccordé le terminal TA.
- 31 : Ce message de demande d'établissement d'un appel est retransmis à un réseau CS-A à commutation de circuits.
- 32 : Ce message de demande d'établissement d'un appel est retransmis ensuite à un réseau CS-B à commutation de circuits, auquel est raccordé l'autocommutateur privé IP-PBX.
- 33 : Le réseau CS-B à commutation de circuits envoie un signal de sonnerie à.
- 34 : L'autocommutateur IP-PBX envoie un signal de sonnerie au terminal fixe TB2'.
- 35 : Selon un procédé connu, le réseau CS-B à commutation de circuits envoie en outre un signal de sonnerie au terminal mobile TB1', parce que l'utilisateur B a configuré le réseau CS-B pour faire sonner aussi le terminal mobile TB1'.
- 36 : Le réseau CS-B à commutation de circuits envoie en outre un signal de sonnerie au terminal TB3' qui est un logiciel de téléphonie exécuté par un ordinateur personnel, parce que l'utilisateur B a configuré le réseau CS-B pour faire sonner aussi le terminal logiciel TB3'.
- 37 : Dans cet exemple, l'utilisateur B prend l'appel sur le terminal fixe TB2. Le terminal TB2 envoie donc à l'autocommutateur IP-PBX un message indiquant que l'appel est accepté.
- 38 : L'autocommutateur IP-PBX envoie au réseau CS-B un message indiquant que l'appel est accepté.
- 39, 40 : Dans le réseau CS-B ou le réseau IMS-B, un dispositif D' mettant en oeuvre le procédé selon l'invention fait cesser la sonnerie sur le terminal mobile TB1' et sur le terminal logiciel TB3', sans que l'utilisateur B intervienne sur ces deux terminaux TB1' et TB3'. Selon le type du réseau CS-B et selon le type des terminaux TB1' et TB3', la façon de commander la sonnerie dans chaque terminal diffère. Dans un terminal téléphonique analogique classique, la sonnerie dure tant que le signal de sonnerie est envoyé au terminal. Le réseau interrompt l'envoi du signal de sonnerie pour arrêter la sonnerie. Dans d'autres types de réseau, le réseau envoie un premier message pour que le terminal commence la sonnerie puis envoie un second message pour arrêter la sonnerie.
- 41 : Le réseau CS-B et le réseau IMS-B envoie au réseau CS-A un message indiquant que le terminal appelé est en train de sonner.
- 42 : Le réseau CS-A retransmet, au réseau IMS- A, un message indiquant que le terminal appelé est en train de sonner.
- 43 : Le réseau IMS-A retransmet, au terminal TA' de l'utilisateur A, un message indiquant que le terminal appelé est en train de sonner.

L'échange de signaux est analogue si l'utilisateur B refuse l'appel, quel que soit le procédé pour refuser l'appel, par exemple en éteignant son téléphone portable ou en pressant une touche « Raccrocher ». L'utilisateur A reçoit toujours le signal de retour d'appel.

L'invention n'est pas limitée aux terminaux purement téléphoniques, le procédé est applicable aussi bien aux terminaux multimédia.

L'invention n'est pas limitée aux réseaux de type IMS, le procédé est applicable à tout type de réseau de télécommunication.

## Revendications

1. Procédé pour arrêter les sonneries d'un groupe de terminaux (TB1, TB2, TB3) qui sonnent simultanément lorsqu'un appel est destiné à un des terminaux du groupe, comportant les étapes consistant à :
- émettre un signal de retour d'appel (19-21 ; 41-43),
- détecter un signal indiquant qu'un appel a été refusé par un terminal de ce groupe, - et à commander l'arrêt (17, 18) des sonneries dans tous les terminaux du groupe ; **caractérisé en ce qu'**il comporte en outre une étape consistant à continuer d'émettre le signal de retour d'appel (19-21 ; 41-43).

2. Dispositif programmable comportant des moyens de stockage sur lesquels est enregistré un programme, ce programme comportant des instructions qui, lorsqu'elles sont exécutées, réalisent les étapes du procédé selon la revendication 1.

3. Moyen de stockage sur lequel est enregistré un programme comportant des instructions qui, lorsqu'elles sont exécutées sur un dispositif programmable, réalisent les étapes du procédé selon la revendication 1.

## Patentansprüche

1. Verfahren zum Unterbrechen der Klingeltöne einer Gruppe von Endgeräten (TB1, TB2, TB3), welche gleichzeitig klingeln, wenn ein Anruf für eines der Endgeräte der Gruppe bestimmt ist, die folgenden Schritte umfassend:
- Ausgeben eines Rückrufsignals (19-21; 41-43),
- Erkennen eines Signals, welches angibt, dass die Annahme eines Anrufs von einem Endgerät dieser Gruppe verweigert wurde, und
- Steuern der Unterbrechung (17, 18) der Klingeltöne in allen Endgeräten der Gruppe; **dadurch gekennzeichnet, dass** es weiterhin einen Schritt, welcher darin besteht, die Ausgabe des Rückrufsignals (19-21; 41-43) fortzusetzen, umfasst.

2. Programmierbare Vorrichtung mit Speichermitteln, auf welchen ein Programm aufgezeichnet ist, wobei dieses Programm Befehle enthält, die bei deren Ausführung die Schritte des Verfahrens gemäß Anspruch 1 durchführen.

3. Speichermittel, auf dem ein Programm aufgezeichnet ist, welches Befehle enthält, die bei deren Ausführung auf einer programmierbaren Vorrichtung die Schritte des Verfahrens gemäß Anspruch 1 durchführen.

## Claims

1. A method for stopping the ringing of a group of terminals (TB1, TB2, TB3) that ring simultaneously when a call is placed to one of the terminals of the group, comprising the steps consisting of:
- emitting a call return signal (19-21; 41-43),
- detecting a signal indicating that a call has been rejected by a terminal of that group,
- and of ordering the stopping (17, 18) of the ringing in all the terminals of the group; **characterized in that** it further comprises a step consisting of continuing to emit the call return signal (19-21; 41-43).

2. A programmable device comprising means of storage in which a program is stored, that program comprising instructions which, when executed, carry out the steps of the method according to claim 1.

3. A means of storage storage in which a program is stored comprising instructions which, when executed on a programmable device, carry out the steps of the method according to claim 1.
